# FASCICULE DE BREVET EUROPEEN

(11) **EP 0 542 588 B1**
(45) Date de publication et mention de la délivrance du brevet: **08.01.1997**
(21) Numéro de dépôt: 92402868.1
(22) Date de dépôt: 20.10.1992
(51) Int. Cl.: E04B 9/18, F16B 15/00

(54) **Suspente pour faux plafond comportant des languettes élastiques d'accrochage**
Abhängemittel für Deckenbekleidung versehen mit elastischem Klemmhaken
Suspending means for false celing composed of elastic lips on hooking means

(30) Priorité: 12.11.1991 FR 9113894
(43) Date de publication de la demande: 19.05.1993
(73) Titulaire: PLATRES KNAUF ET CIE, 77165 St. Soupplets (FR)
(72) Inventeur: Sanchez, José, F-68610 Lautenbach Zell (FR)
(74) Mandataire: Netter, André

(56) Documents cités:
- FR-A- 2 426 778
- US-A- 2 377 169

## Description

L'invention concerne un dispositif de suspension ou "suspente" pour suspendre un élément de construction, notamment un faux plafond, à une structure porteuse présentant une fente ouverte vers le bas, par exemple un plancher formé de poutrelles et de hourdis séparés latéralement par des interstices.

FR-A-2 426 778 décrit un tel dispositif comprenant une platine formée par une plaque mince, propre à être insérée dans la fente et dans laquelle sont découpées des languettes articulées élastiquement par rapport à la platine et qui s'écartent obliquement au-delà d'une face de celle-ci en formant des pointes propres à s'accrocher sur une paroi de la fente.

Ce dispositif connu fournit une résistance à l'arrachement de l'ordre de 90 kg.

Le but de l'invention est d'augmenter sensiblement cette résistance à l'arrachement.

Ce résultat est atteint, selon l'invention, grâce à un dispositif de suspension comprenant une platine formée par une plaque mince, propre à être insérée dans ladite fente, caractérisé en ce que la platine comporte deux régions marginales opposées recourbées de façon à venir en prise élastiquement avec une première paroi de le fente, en sollicitant la région médiane de la platine vers la seconde paroi, et présentant des bords respectifs inclinés de façon à se rapprocher l'un de l'autre vers le bas, dans lesquels débouchent des encoches allongées traversant l'épaisseur de la platine pour définir des languettes élastiques juxtaposées propres à venir chacune en contact avec la première paroi.

Des caractéristiques optionnelles avantageuses de l'invention sont énoncées ci-après :
- Les encoches débouchant dans un même bord sont orientées vers le bas en direction de celui-ci, sensiblement parallèlement entre elles.
- Lesdits bords inclinés sont arrondis et convexes.
- Des pattes découpées dans la platine s'écartent de celle-ci dans le sens opposé à celui dans lequel les régions marginales sont recourbées de façon à venir en prise élastiquement avec la seconde paroi de la fente.
- Au moins une patte est propre à venir en prise avec la seconde paroi par un bord d'extrémité sensiblement rectiligne.
- Au moins une patte est propre à venir en prise avec la seconde paroi par une extrémité en forme de pointe.
- Différentes pattes découpées sont articulées à la platine selon différentes directions.
- Chaque patte comprend un premier segment s'étendant sensiblement dans le même plan que la région médiane de la platine et séparée de celle-ci et/ou du premier segment d'au moins une autre patte adjacente par des lignes de découpe définissant des bords latéraux du premier segment, et un second segment s'étendant obliquement par rapport audit plan entre le premier segment et l'extrémité de prise de la patte.
- Les lignes de découpe débouchent dans une ouverture formée par enlèvement de matière dans la plaque.

D'autres caractéristiques et avantages de l'invention ressortiront de la description détaillée de quelques exemples de réalisation, et des dessins annexés dans lesquels :
- les figures 1, 2 et 3 sont des vues respectivement de face, de côté et de dessus d'un premier exemple de réalisation d'un dispositif selon l'invention ; et
- les figures 4 et 5 sont des vues analogues aux figures 1 et 3, relatives à un second exemple.

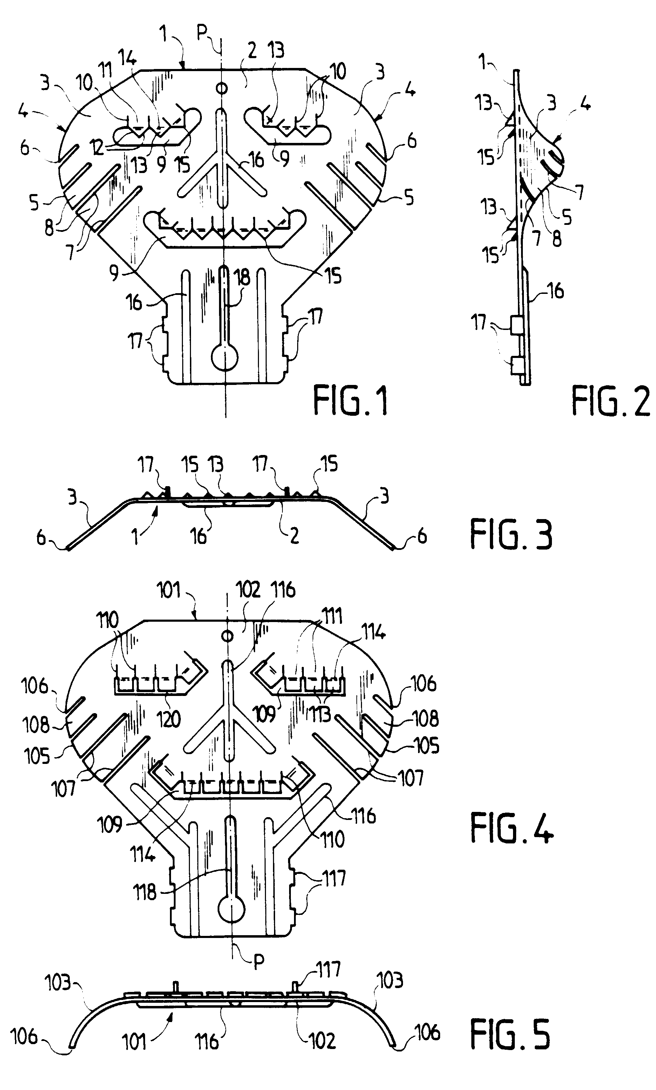

Le dispositif des figures 1 à 3, constitué par une pièce unique en tôle d'acier ressort ou de tout autre métal présentant des caractéristiques équivalentes, symétrique par rapport à un plan vertical P traversant son épaisseur, comprend une platine 1 dont une région médiane 2 est sensiblement plane. A cette région médiane se raccordent, de part et d'autre du plan P, deux régions marginales latérales 3 qui sont repliées hors du plan de celle-ci pour faire saillie au-delà de l'une de ses faces, repérée 1a, en formant avec elle des dièdres obtus. Chaque région 3 se termine par un bord arrondi convexe 4 dont la portion 5 voisine du point 6 le plus éloigné du plan P et s'étendant au-dessous de ce point, inclinée par conséquent vers le plan P à partir du point 6, est découpée en segments par des encoches allongées 7 traversant l'épaisseur de la platine et s'étendant vers l'intérieur de celle-ci à partir de la portion 5, obliquement vers le haut et sensiblement parallèlement les unes aux autres. Ces encoches définissent entre elles des languettes élastiques 8 dont les extrémités libres sont constituées par les segments de la portion 5 du bord 4.

Dans la région médiane 2 de la platine, à distance du bord périphérique de cette dernière, sont ménagées trois ouvertures traversantes 9, dont une ouverture médiane traversant le plan P et deux ouvertures latérales situées de part et d'autre de celui-ci. Dans le bord supérieur de chacune de ces ouverture débouche une série de lignes de découpe 10 qui définissent entre elles des segments 11 de la plaque de tôle qui sont disposés dans le plan de la région 2 et qui sont reliés élastiquement à celle-ci. La portion du bord de l'ouverture 9 comprise entre deux découpes consécutives 10 est formée de deux segments de droite 12 limitant un segment triangulaire 13 de la plaque de tôle, lequel est plié selon une ligne 14, qui le relie au segment 11, pour faire saillie obliquement vers le bas hors du plan de la région 2, à l'opposé de la face la de celle-ci. Les deux segments 11 et 13 reliés entre eux par une ligne 14 forment une patte élastique qui se termine par une pointe 15 définie par les deux côtés 12.

Lorsque le dispositif est introduit par dessous dans une fente de la structure de support, les bords arrondis 4 viennent en prise avec une première paroi de la fente et les pointes 15 des pattes 11, 13 avec la seconde paroi. Les régions 3 subissent un effort qui tend à les ramener dans le plan de la région médiane 2. Sous cet effort, les languettes 8 se déforment élastiquement, indépendamment les unes des autres, leurs extrémités libres constituées par les segments de la portion de bord incliné 5 venant s'accrocher sur la première paroi de la fente. Certaines des pattes 11, 13 sont orientées vers le bas de façon à exercer une force résistante à l'arrachement orientée parallèlement au plan P, et d'autres à la fois vers le bas et latéralement pour exercer une force résistante orientée selon une direction inclinée par rapport au plan P, la résultante de toutes ces forces étant orientée parallèlement à ce plan en raison de la configuration symétrique du dispositif.

Le dispositif des figures 4 et 5 comprend des éléments identiques ou similaires aux éléments du dispositif des figures 1 à 3 qui sont désignés par les mêmes numéros de référence additionnés du nombre 100. Seules les caractéristiques qui différencient le second dispositif du premier seront décrites ci-après.

Les régions marginales 103 de la platine 101, au lieu d'être sensiblement planes et de former des dièdres obtus avec la région médiane 102, sont incurvées et tangentes à cette dernière. Quant aux pattes découpées à l'intérieur de la platine, leurs segments en saillie 113 ne sont pas triangulaires, mais rectangulaires, et se terminent par des bords rectilignes 120 qui viennent en prise avec la paroi de la fente.

Bien entendu, les caractéristiques spécifiques des deux exemples décrits (formes des régions marginales et des pattes) peuvent être combinées à volonté. Par ailleurs les pattes peuvent être supprimées, la région médiane de la platine venant directement en appui sur la seconde paroi de la fente.

En fonction du nombre de languettes des régions marginales, de la présence ou non et du nombre des pattes découpées dans la région médiane, la résistance à l'arrachement du dispositif peut aller de 50 à 100% au-dessus de celle des dispositifs connus.

## Revendications

1. Dispositif pour suspendre un élément de construction à une structure porteuse présentant une fente ouverte vers le bas, comprenant une platine (1) formée par une plaque mince, propre à être insérée dans ladite fente, caractérisé en ce que la platine comporte deux régions marginales opposées (3) recourbées de façon à venir en prise élastiquement avec une première paroi de la fente, en sollicitant la région médiane (2) de la platine vers la seconde paroi, et présentant des bords respectifs (5) inclinés de façon à se rapprocher l'un de l'autre vers le bas, et dans lesquelles sont formées des languettes élastiques juxtaposées (8) propres à venir chacune en contact avec la première paroi, définies par des encoches allongées (7) traversant l'épaisseur de la platine, lesdites encoches débouchant dans lesdits bords (5).

2. Dispositif selon la revendication 1, caractérisé en ce que les encoches débouchant dans un même bord sont orientées vers le bas en direction de celui-ci, sensiblement parallèlement entre elles.

3. Dispositif selon l'une des revendications 1 et 2, caractérisé en ce que lesdits bords inclinés sont arrondis et convexes.

4. Dispositif selon l'une des revendications précédentes, caractérisé en ce que des pattes (11,13) découpées dans la platine s'écartent de celle-ci dans le sens opposé à celui dans lequel les régions marginales sont recourbées de façon à venir en prise élastiquement avec la seconde paroi de la fente.

5. Dispositif selon la revendication 4, caractérisé en ce qu'au moins une patte (111,113) est propre à venir en prise avec la seconde paroi par un bord d'extrémité (120) sensiblement rectiligne.

6. Dispositif selon l'une des revendications 4 et 5, caractérisé en ce qu'au moins une patte (11,13) est propre à venir en prise avec la seconde paroi par une extrémité en forme de pointe (15).

7. Dispositif selon l'une des revendications 4 à 6, caractérisé en ce que différentes pattes découpées sont articulées à la platine selon différentes directions.

8. Dispositif selon l'une des revendications 4 à 7, caractérisé en ce que chaque patte comprend un premier segment (11) s'étendant sensiblement dans le même plan que la région médiane de la platine et séparée de celle-ci et/ou du premier segment d'au moins une autre patte adjacente par des lignes de découpe (10) définissant des bords latéraux du premier segment, et un second segment (13) s'étendant obliquement par rapport audit plan entre le premier segment et l'extrémité de prise de la patte.

9. Dispositif selon la revendication 8, caractérisé en ce que les lignes de découpe débouchent dans une ouverture formée par enlèvement de matière dans la plaque.

10. Dispositif selon l'une des revendications 4 à 9, caractérisé en ce que la platine et les pattes sont formées d'une seule pièce en acier ressort ou analogue.

## Patentansprüche

1. Vorrichtung zum Abhängen eines Konstruktionselementes an einem Tragwerk, das einen nach unten offenen Schlitz aufweist, mit einer aus einer dünnen Platte bestehenden Platine (1), die in den Schlitz einzusetzen ist,
dadurch gekennzeichnet, daß die Platine zwei gegenüberliegende Randbereiche (3) aufweist, die derart abgebogen sind, daß sie an einer ersten Wand des Schlitzes elastisch zur Anlage kommen, wobei sie den mittleren Bereich (2) der Platine gegen die zweite Wand drücken, und die zugehörige Ränder (5) aufweisen, die derart geneigt sind, daß sie sich in Richtung nach unten einander annähern, und in denen nebeneinanderliegende elastische Zungen (8) ausgebildet sind, die mit der ersten Wand in Kontakt kommen und durch längliche Einschnitte (7) gebildet sind, die die Platine in Richtung ihrer Dicke durchsetzen und in die Ränder (5) münden.

2. Vorrichtung nach Anspruch 1,
dadurch gekennzeichnet, daß die in denselben Rand mündenden Einschnitte im wesentlichen parallel zueinander nach unten in Richtung auf den Rand verlaufen.

3. Vorrichtung nach einem der Ansprüche 1 und 2,
dadurch gekennzeichnet, daß die geneigt verlaufenden Ränder abgerundet und konvex sind.

4. Vorrichtung nach einem der vorhergehenden Ansprüche, dadurch gekennzeichnet, daß aus der Platine ausgeschnittene Klauen (11, 13) sich von der Platine aus in eine zur Ausrichtung der abgebogenen Randbereiche entgegengesetzte Richtung abspreizen, so daß sie an der zweiten Wand des Schlitzes elastisch angreifen.

5. Vorrichtung nach Anspruch 4,
dadurch gekennzeichnet, daß mindestens eine Klaue (111, 113) an der zweiten Wand mit einem endseitigen Rand (120) angreift, der im wesentlichen geradlinig verläuft.

6. Vorrichtung nach einem der Ansprüche 4 und 5, dadurch gekennzeichnet, daß mindestens eine Klaue (11, 13) an der zweiten Wand mit einem als Spitze (15) ausgebildeten Ende angreift.

7. Vorrichtung nach einem der Ansprüche 4 bis 6, dadurch gekennzeichnet, daß aus der Platine ausgeschnittene unterschiedliche Klauen in unterschiedliche Richtungen abgebogen sind.

8. Vorrichtung nach einem der Ansprüche 4 bis 7, dadurch gekennzeichnet, daß jede Klaue einen ersten Abschnitt (11) aufweist, der im wesentlichen in derselben Ebene wie der mittlere Bereich der Platine liegt und von diesem und/oder von dem ersten Abschnitt mindestens einer weiteren angrenzenden Klaue durch Schnittlinien (10) getrennt ist, die Seitenränder des ersten Abschnittes bilden, und die Klaue einen zweiten Abschnitt (13) aufweist, der sich schräg zu dieser Ebene zwischen dem ersten Abschnitt und dem Eingriffsende der Klaue erstreckt.

9. Vorrichtung nach Anspruch 8,
dadurch gekennzeichnet, daß die Schnittlinien in eine Öffnung münden, die durch Entfernen von Material in der Platte gebildet ist.

10. Vorrichtung nach einem der Ansprüche 4 bis 9, dadurch gekennzeichnet, daß die Platine und die Klauen einstückig aus Federstahl oder dergleichen hergestellt sind.

## Claims

1. Device for suspending a construction element on a carrying structure having a slot which is open towards the base, comprising a mechanical plate (1) formed of a thin plate, which can be inserted into said slot, characterised in that the mechanical plate comprises two opposite marginal areas (3) which are curved in such a manner as to engage resiliently with a first wall of the slot, by stressing the median area (2) of the mechanical plate against the second wall, having respective edges (5) which are slanted in such a manner as to become closer to one another towards the base, and in which there are formed juxtaposed resilient lips (8), which can each come into contact with the first wall, defined by elongate notches (7) passing through the thickness of the mechanical plate, said notches opening out into said edges (5).

2. Device according to Claim 1, characterised in that the notches opening out into the same edge are directed towards the base in the direction thereof, substantially parallel to one another.

3. Device according to one of Claims 1 and 2, characterised in that said slanted edges are rounded and convex.

4. Device according to one of the preceding Claims, characterised in that fastening hooks (11,13) cut into the mechanical plate extend therefrom in the direction which is opposite to that in which the marginal areas are curved in such a manner as to engage resiliently with the second wall of the slot.

5. Device according to Claim 4, characterised in that at least one fastening hook (111,113) can engage with the second wall by way of a substantially rectilinear end edge (120).

6. Device according to one of Claims 4 and 5, characterised in that at least one fastening hook (11,13) can engage with the second wall by way of an end in the form of a point.

7. Device according to any one of Claims 4 to 6, characterised in that the different cut fastening hooks are articulated on the mechanical plate in different directions.

8. Device according to one of Claims 4 to 7, characterised in that each fastening hook comprises a first segment (11) extending substantially in the same plane as the median area of the mechanical plate and separated therefrom and/or from the first segment of at least one other adjacent fastening hook by cutting lines (10) defining lateral edges of the first segment, and a second segment (13) extending obliquely in relation to said plane between the first segment and the engagement end of the fastening hook.

9. Device according to Claim 8, characterised in that the cutting lines open out into an aperture formed by removing material from the plate.

10. Device according to one of Claims 4 to 9, characterised in that the mechanical plate and the fastening hooks are formed of a single piece of spring steel or the like.
